# EUROPÄISCHE PATENTSCHRIFT

(11) **EP 3 590 345 B1**
(45) Veröffentlichungstag und Bekanntmachung des Hinweises auf die Patenterteilung: **15.05.2024**
(21) Anmeldenummer: 18181157.1
(22) Anmeldetag: 02.07.2018
(51) Int. Cl.: A22C 11/10, B65B 51/22

(54) **VERSCHLUSSMODUL UND VERFAHREN ZUM VERSCHLIESSEN UND/ODER TRENNEN VON GEFÜLLTEN ÜBER EINEN WURSTZOPF VERBUNDENEN WURSTHÜLLEN**
CLOSURE MODULE AND METHOD FOR CLOSING AND/OR SEPARATING FILLED SAUSAGE CASINGS CONNECTED WITH A LINK
MODULE DE FERMETURE ET PROCÉDÉ DE FERMETURE ET/OU DE SÉPARATION DES ENVELOPPES DE SAUCISSE REMPLIES RELIÉES À L'AIDE D'UNE TRESSE DE CHAIR À SAUCISSE

(43) Veröffentlichungstag der Anmeldung: 08.01.2020
(73) Patentinhaber: Albert Handtmann Maschinenfabrik GmbH & Co. KG, 88400 Biberach (DE)
(72) Erfinder: STROHM, Kurt, 88448 Attenweiler (DE); SCHLIESSER, Gerhard, 88489 Wain (DE); BAECHTLE, Manfred, 88433 Schemmerhofen (DE); WINGHART, Robert, 89613 Oberstadion (DE); OSSWALD, Florian, 89079 Ulm/Einsingen (DE); MERK, Jochen, 88416 Ochsenhausen (DE)
(74) Vertreter: Grünecker Patent- und Rechtsanwälte PartG mbB

(56) Entgegenhaltungen:
- EP-A1- 1 258 198
- EP-A1- 1 609 366
- EP-A2- 1 471 003
- DE-B- 1 080 011
- GB-A- 716 783

## Beschreibung

Die Erfindung betrifft ein Verschlussmodul und ein Verfahren zum Verschließen und/oder Trennen von gefüllten über einen Wurstzopf verbundenen Wursthüllen bzw. auch zum Verschließen und/ oder Trennen von Wursthüllenenden.

Bei der Herstellung von Wurstprodukten durch Füll- und Portioniersysteme werden hauptsächlich Natur-, Kunst- und Kollagendärme als Wursthüllen verwendet und mittels einer Vakuumfüllmaschine mit Brät gefüllt. Durch das Einschnüren bzw. Abteilen (zum Beispiel Abdrehen) der befüllten Wursthüllen innerhalb der Abdrehlinie ergibt sich eine Wurstkette aus mehreren zusammenhängenden, gefüllten Wursthüllen, d.h. Portionen. Die zusammenhängenden Portionen werden an definierten Abteilstellen verschlossen, so dass sich die Abteilstelle, beim Trennvorgang mit Hilfe zum Beispiel eines Messers, nicht wieder öffnen kann. Ebenso müssen offene Wurstenden bei einem Darmriss sowie das Ende der Wurstkette verschlossen werden. Aus der DE1080011B ist bereits ein Verschlussmodul bekannt mit einem Schweißwerkzeug. Dieses Dokument zeigt nicht, dass über Elektroden während eines Zeitabschnitts eine Energiemenge pro Zeit abgegeben werden kann, derart, dass sich der Wurstzopf erwärmt und verschlossen werden kann, wenn ein Strom von der ersten Elektrode in den Wurstzopf und über den Wurstzopf in die zweite Elektrode fließt. Die GB716783A beschreibt auch bereits ein Verschlussmodul.

Zum Verschließen von Wurstportionen sind bereits beispielsweise Clipper zum Setzen von Metallclips bekannt. In der EP1609366 ist es bereits beschrieben, einen elektrischen Strom an zwei benachbarte Wurstportionen anzulegen, der dann von einer Wurstportion zur benachbarten Wurstportion fließt, wodurch der dazwischen liegende Wurstzopf durchtrennt werden kann. Bei dieser Anordnung sind die Elektroden in einem vorgeschriebenen festen Abstand angeordnet. Dadurch, dass der Strom in die Würste eingekoppelt wird, sind relativ hohe Stromstärken notwendig. Somit ist nicht ausgeschlossen, dass es zu Reaktionen im Füllgut und zur Schädigung der empfindlichen Wursthüllen kommt. Darüber hinaus kommen die Elektroden auch direkt mit den Wurstkuppen der Wurstportionen in Kontakt. An den Wurstkuppen entstehen jedoch durch die zum Beispiel abgedrehte Abteilstelle und Verdrängung der Wurstmasse mechanische Spannungen an der Wursthülle. Wird nun an der Wurstkuppe ein Strom eingeleitet, kann die unter mechanischer Spannung stehende Wursthülle beim Erwärmen einreißen. Dies ist insbesondere bei empfindlichen Naturdärmen möglich. Ein weiterer Nachteil der bekannten Vorrichtung liegt darin, dass das Ende einer Wurstkette nicht verschlossen werden kann, da stets zwei Würste notwendig sind, um die Spannung anzulegen. Auch das Umrüsten bei unterschiedlichen Kalibern ist umständlich.

Hiervon ausgehend liegt der vorliegenden Erfindung die Aufgabe zugrunde, ein verbessertes Verschlussmodul und ein verbessertes Verfahren zum Verschließen und/oder Trennen von gefüllten über einen Wurstzopf verbundenen Wursthüllen bereitzustellen, die ein schonenderes, einfaches und zuverlässiges Verschließen von gefüllten Wursthüllen, selbst am Wurstkettenende ermöglichen.

Erfindungsgemäß wird diese Aufgabe durch die Merkmale der unabhängigen Patentansprüche 1 und 10 gelöst.

Ein Verschlussmodul zum Verschließen und/oder Trennen von gefüllten über einen Wurstzopf verbundenen Wursthüllen umfasst dabei eine erste und eine zweite, der ersten gegenüberliegenden Elektrode. Die Elektroden sind derart angeordnet, dass ein Wurstzopf dazwischen platzierbar ist, das heißt dass die Elektroden auf gegenüberliegenden Seiten des Wurstzopfs angeordnet sind. Die Elektroden können relativ aufeinander zu bewegt werden, das bedeutet, dass zumindest eine Elektrode zur anderen hin bewegbar ist, so dass sich der Elektrodenabstand -in Bewegungsrichtung der Elektroden betrachtet- reduzieren lässt. Die Elektroden sind soweit relativ aufeinander zu und auf den Wurstzopf bewegbar, dass ein Strom von der ersten Elektrode in den Wurstzopf und über den Wurstzopf in die zweite Elektrode fließen kann. Somit fließt der Strom zum Verschließen und/oder Trennen nur durch den Wurstzopf und nicht durch die Portion, d.h. die gefüllte Wursthülle. Dies bringt den Vorteil mit sich, dass die Elektroden nicht die gefüllte Wursthülle berühren, sondern lediglich den Wurstzopf kontaktieren. Der Wurstzopf, das heißt zum Beispiel die abgedrehte Wursthülle zwischen den gefüllten Wurstportionen, dient dabei als Elektrolyt zwischen dem Elektrodenpaar. Der Strom kann also von einer Elektrode durch den Wurstzopf zur anderen Elektrode fließen. Die elektrische Energie wird beim Durchfließen des Wurstzopfs (Widerstand) in thermische Energie umgewandelt und erwärmt diesen. Im Naturdarm beginnt dann beispielsweise die thermische Denaturierung von Kollagen (Gerinnung von Eiweiß). Ab circa 100 ° C verdampft weiter Wasser, so dass der Naturdarm des Wurstzopfs koaguliert und somit verschlossen wird. Das bedeutet, dass die aufeinander folgenden gefüllten Wursthüllen über den Wurstzopf verschlossen sind aber noch zusammenhängen. Bei weiterer Energiezuführung steigt die Temperatur und es kommt zum Zersetzen des Darms und zum Abtrennen. Grundsätzlich besteht die Möglichkeit, den Wurstzopf nur soweit zu erwärmen, dass er koaguliert bzw. die gefüllten Wursthüllen verschlossen werden.

Ein weiterer Vorteil der Erfindung liegt darin, dass dadurch, dass der Wurstzopf über die aufeinander zu bewegbaren Elektroden verschlossen bzw. verschlossen und getrennt wird, auch am Ende einer Wurstkette die letzte Wurst noch verschlossen werden kann. Dadurch entfällt im Vergleich zum Stand der Technik, dass für das Verschließen einer Wurstportion am Ende einer Wurstgruppe eine Zusatzportion mit oder ohne Brät benötigt wird. Im Stand der Technik wurde zusätzlicher leerer Darm oft mit produziert, damit am Ende einer Wurstgruppe beispielsweise ein Knoten gemacht werden konnte. Außerdem musste der Bediener im Stand der Technik bei der Herstellung einer zusätzlichen Leerportion die Wurstmasse vor dem Verschließen in die zu verschließende Wurstportion zurückstreifen und auf Portionslänge und Prallheit achten. Die Erfindung ermöglicht also eine Reduktion von Darm- und/oder Brätkosten.

Außerdem ergibt sich eine Produktoptimierung hinsichtlich Gewicht, Länge, Optik und Prallheit der zu verschließenden Portionen. Insgesamt ergibt sich durch sicher verschlossene Wurstenden auch eine Verbesserung der Hygiene.

Da die Elektroden auf den Wurstzopf bewegt werden, kann das Verschlussmodul beliebig für unterschiedliche Kaliber eingesetzt werden, ohne dass ein mechanisches Umrüsten notwendig ist.

Gemäß einer bevorzugten Ausführungsform der vorliegenden Erfindung weist das Verschlussmodul weiter ein erstes Stempelelement sowie ein gegenüberliegendes zweites Stempelelement auf, die derart relativ aufeinander zu bewegbar sind, dass der Wurstzopf zwischen den gegenüberliegenden Stempelelementen geklemmt wird, das bedeutet, dass die gegenüberliegenden Stirnseiten der Stempelelemente auf Anschlag gefahren werden können. Das Stempelelement dient zur Klemmung des Wurstzopfes und als Abstandshalter und Isolator zur Wurstkuppe.

Es ist besonders vorteilhaft, wenn das Verschlussmodul ein erstes Stempelpaar mit zwei nebeneinander angeordneten ( in Längsrichtung des Verschlussmoduls, bzw. des gestreckten Wurstzopfes, d.h. quer zur Bewegungsrichtung der Elektroden) voneinander beabstandeten Stempelelementen aufweist, sowie ein gegenüberliegendes zweites Stempelpaar mit zwei nebeneinander angeordneten (in Längsrichtung) voneinander beabstandeten Stempelelementen, die derart relativ aufeinander zubewegbar sind, dass der Wurstzopf zwischen den gegenüberliegenden Stempelelementen geklemmt wird, wobei die jeweiligen Elektroden zwischen den Stempelelementen eines Stempelpaares angeordnet sind. Das Stempelpaar kann auch einstückig, zum Beispiel als Verschlusseinheit ausgebildet sein. Durch das Stempelelementpaar ergibt sich eine verbesserte Stabilität. Darüber hinaus ermöglichen die Stempelelemente eine sichere Beabstandung zu den Wurstkuppen der gefüllten Wursthüllen. Der Strom wird durch das Elektrodenpaar zwischen den geklemmten Stellen innerhalb des Wurstzopfes oder des offenen Wurstendes eingeleitet und fließt somit nicht über die unter mechanischer Spannung stehende Wursthülle der Wurstkuppen. Durch das Klemmen des Wurstzopfes vor dem Übergang zur Wurstkuppe werden die mechanischen Spannungen sozusagen "festgehalten". Die Klemmung der Abteilstelle soll erst nach dem Ende des Stromflusses zum Beispiel nach dem Verschließen und oder Trennen entfernt werden, so dass ein prozesssicheres Verschließen möglich ist. Die Stempelelemente sind aus einem nichtleitendem Material gefertigt, derart, dass kein Strom von den Elektroden zu den Stempelelementen hinfließt.

Vorteilhafterweise sind die Elektroden nur bis zu einem Mindestabstand am relativ aufeinander zu bewegbar. Somit kann verhindert werden, dass es zu einem Kurzschluss innerhalb des Elektrodenpaars kommen kann.

Gemäß einer bevorzugten Ausführungsform sind die nebeneinander liegenden Stempelelemente eines Stempelpaars als Spreizelemente ausgebildet, derart, dass sie seitlich auseinander von den Elektroden wegbewegbar sind. Vorzugsweise können sich die Stempelelemente auseinanderbewegen, bevor sie den Wurstzopf klemmen, wobei das Verschlussmodul vorzugweise eine Führungseinrichtung aufweist, die derart ausgebildet ist, dass wenn die gegenüberliegenden Stempelelemente relativ aufeinander zu bewegt werden, sie sich zumindest abschnittsweise gleichzeitig seitlich auseinander, zu den jeweiligen Wurstenden hin bewegen.

Somit kann das Verschlussmodul innerhalb einer engeren Abteilstelle ansetzen. Kurz bevor die Stempelelemente den Wurstzopf klemmen, schwenken diese beispielsweise über eine Kurvenbahn nach außen in Richtung zu den Wurstkuppen, vergrößern die Abteilstelle, das heißt den Wurstzopf und klemmen den Wurstzopf am Übergang zur Wurstkuppe. Ohne diese Spreizfunktion, das heißt, wenn die Stempelelemente sich beim Eingriff in den Wurstzopf bereits in gespreizter Stellung über den Wurstkuppen befinden, besteht die Gefahr, dass die Stempelelemente beim Schließen auf die unter mechanischer Spannung stehenden Wurstgruppen drücken und diese dann beschädigen. Es soll nur der Wurstzopf geklemmt werden, die Wurstkuppen sollen unberührt bleiben.

Gemäß einem bevorzugten Ausführungsbeispiel sind die Stempelelemente zumindest eines Stempelelementpaars um eine Achse, die sich im Wesentlichen entlang der Längsrichtung und quer zur Bewegungsrichtung der Elektroden erstreckt, drehbar gelagert, insbesondere frei drehbar gelagert. Es ist auch möglich, dass sich die Stempelelemente zumindest eines Stempelelementes zusätzlich oder alternativ um eine Achse, die sich im Wesentlichen zur Längsachse des Verschlussmoduls und quer zur Bewegungsrichtung der Elektroden erstreckt, drehbar gelagert sind.

Somit kann sichergestellt werden, dass die Stirnflächen der Stempelelemente stets parallel zueinander ausgerichtet sind und Toleranzen ausgeglichen werden können. Es ist auch möglich, dass beispielsweise ein Stempelelement um eine Achse, die sich in Längsrichtung erstreckt, drehbar gelagert ist und das gegenüberliegende Stempelelement um eine Achse senkrecht dazu drehbar gelagert ist.

Die Elemente sind vorteilhafterweise frei drehbar gelagert, so dass ein automatischer Toleranzausgleich stattfinden kann. Als Toleranzausgleich kann auch gemäß einem weiteren Ausführungsbeispiel zumindest ein Stempelpaar eine federvorgespannte Linearführung aufweisen.

Gemäß einem bevorzugten Ausführungsbeispiel weist das Verschlussmodul zwei relativ aufeinander zu bewegbare Verschlusseinheiten auf, d.h. dass entweder die erste und/oder die zweite Verschlusseinheit auf die andere bewegt werden kann, wobei die erste Verschlusseinheit die erste Elektrode und ein erstes Stempelelementpaar umfasst und die zweite Verschlusseinheit die zweite Elektrode und das zweite Stempelelementpaar. Zum Toleranzausgleich kann zumindest eine der Verschlusseinheiten um eine Achse in Längsrichtung und/oder eine Achse quer zur Längsrichtung drehbar, insbesondere frei drehbar gelagert sein. Es ist auch möglich, dass eine Verschlusseinheit um eine Achse in Längsrichtung und die andere Verschlusseinheit um eine Achse quer zur Längsrichtung drehbar, insbesondere frei drehbar gelagert ist.

Die Elektroden bzw. Stempelelemente oder aber die Verschlusseinheiten können manuell oder mittels Stellantrieb, insbesondere mittels pneumatischen oder elektrischen Stellantrieb aufeinander zubewegt werden.

Vorteilhafterweise ist das Verschlussmodul als Handgerät ausgebildet und weist einen Griffbereich auf, der zwei beabstandete, gegenüberliegende, aufeinander zu bewegbare Griffelemente umfasst, die jeweils derart mit den gegenüberliegenden Elektroden bzw. Elektroden und Stempelelementen gekoppelt sind, dass wenn die Griffelemente aufeinander zu bewegt werden, sich auch die jeweiligen Elektroden und Stempelelemente aufeinander zu bewegen. Ein entsprechendes Handgerät ist besonders einfach handzuhaben und kann vom Bediener in Form einer Handzange auf einfach Art und Weise eingesetzt werden.

Das erfindungsgemäße Verfahren umfasst folgende Schritte:
Platzieren eines Wurstzopfs zwischen einer ersten und einer zweiten der ersten Elektrode gegenüberliegenden Elektrode, wobei die Elektroden in Längsrichtung betrachtet von den Wurstgruppen der gefüllten Wursthüllen beabstandet sind, derart, dass die Elektroden die gefüllten Wursthüllen nicht berühren,

Bewegen der Elektroden relativ zueinander auf den Wurstzopf, derart, dass ein Strom von der ersten Elektrode in den Wurstzopf fließt und über den Wurstzopf in die zweite Elektrode, wodurch die gefüllten Wursthüllen verschlossen, vorzugsweise getrennt werden.

Gemäß der vorliegenden Erfindung kann also der Strom senkrecht zum Wurstzopf fließen.

Beim Verschließen des Wurstzopfs durch mindestens zwei gegenüber liegenden Stempelelemente, vorzugsweise durch gegenüberliegende Stempelelementpaare, zwischen denen jeweils eine Elektrode liegt, wird der Wurstzopf durch die Stempelelementpaare eingeklemmt, die auf Anschlag fahren. Die Elektroden werden jedoch nur bis zu einem Mindestabstand am relativ aufeinander zu bewegt, so dass es zu keinem Kurzschluss kommen kann.

Die Elektroden geben gemäß der vorliegenden Erfindung während eines ersten Zeitabschnitts eine Energiemenge pro Zeit ab, derart, dass sich der Wurstzopf so stark erwärmt, dass zum Beispiel das Eiweiß im Wurstzopf koaguliert. Eine Koagulation findet beispielsweise bei einer Temperatur in einem Bereich von 65 Grad Celsius bis 100 Grad Celsius statt. Somit können die gefüllten Wursthüllen verschlossen werden. Möchte man nun die gefüllten Wursthüllen auch noch voneinander trennen, kann während eines zweiten Zeitabschnitts die Energiemenge pro Zeit, insbesondere peakartig erhöht werden, derart, dass es zu einem Zersetzen und Trennen des Wurstzopfs kommt.

Vorteilhafterweise werden die Stempelelemente erst dann wieder auseinander bewegt, wenn die Stromzufuhr unterbrochen ist.

Das Verschlussmodul ist insbesondere geeignet für elektrisch leitende Wursthüllen, wie z. B. Schafdarm, Schweinedarm, Rinderdarm und Collagendarm.

Bei dem erfindungsgemäßen Verfahren haben sich hochfrequente Ströme, insbesondere in einem Frequenzbereich von 300 Kilohertz bis 500 Kilohertz und einem Spannungsbereich von 50 bis 500 V, insbesondere in einem Spannungsbereich in einem Bereich von 80 bis 430 Volt als vorteilhaft erwiesen.

Die Erfindung wird nachfolgend unter Bezugnahme der nachfolgenden Figuren näher erläutert.
- Fig. 1: zeigt perspektivisch ein Verschlussmodul gemäß einem ersten Ausführungsbeispiel der vorliegenden Erfindung,
- Fig. 2: zeigt eine Seitenansicht des in Fig. 1 gezeigten Ausführungsbeispiels,
- Fig. 3: zeigt eine Aufsicht auf das in Fig. 1 und 2 gezeigte Ausführungsbeispiel,
- Fig. 4: zeigt eine Vorderansicht des in den Fig. 1 bis 3 gezeigten Ausführungsbeispiels in leicht geöffneter Position,
- Fig. 5: zeigt das in Fig. 4 gezeigte Ausführungsbeispiel in geschlossener Position,
- Fig. 6: zeigt eine Aufsicht auf ein weiteres Ausführungsbeispiel gemäß der vorliegenden Erfindung in nicht gespreizter Position,
- Fig. 7: zeigt das in Fig. 6 gezeigte Ausführungsbeispiel in gespreizter Position,
- Fig. 8: zeigt eine perspektivische Darstellung des in Fig. 6 und 7 gezeigten Ausführungsbeispiels in gespreizter Position,
- Fig. 9: zeigt in perspektivischer Darstellung ein Stempelelement mit Kurvenführung,
- Fig. 10: zeigt in perspektivischer Darstellung ein weiteres Ausführungsbeispiel eines Verschlussmoduls mit drehbar gelagertem Stempelelementpaar,
- Fig. 11: zeigt eine Vorderansicht des in Fig. 10 gezeigten Ausführungsbeispiels,
- Fig. 12: zeigt ein weiteres Ausführungsbeispiel des erfindungsgemäßen Verschlussmoduls mit federvorgespannter Linearführung,
- Fig. 13: zeigt ein weiteres Ausführungsbeispiel der vorliegenden Erfindung in perspektivischer Darstellung,
- Fig. 14: zeigt eine Schnittansicht das in Fig. 13 gezeigten Ausführungsbeispiels,
- Fig. 15: zeigt grobschematisch eine mögliche Elektrodenanordnung gemäß der vorliegenden Erfindung,
- Fig. 16: zeigt perspektivisch ein Verschlussmodul gemäß einem weiteren Ausführungsbeispiel der vorliegenden Erfindung (ähnlich einer Zange)

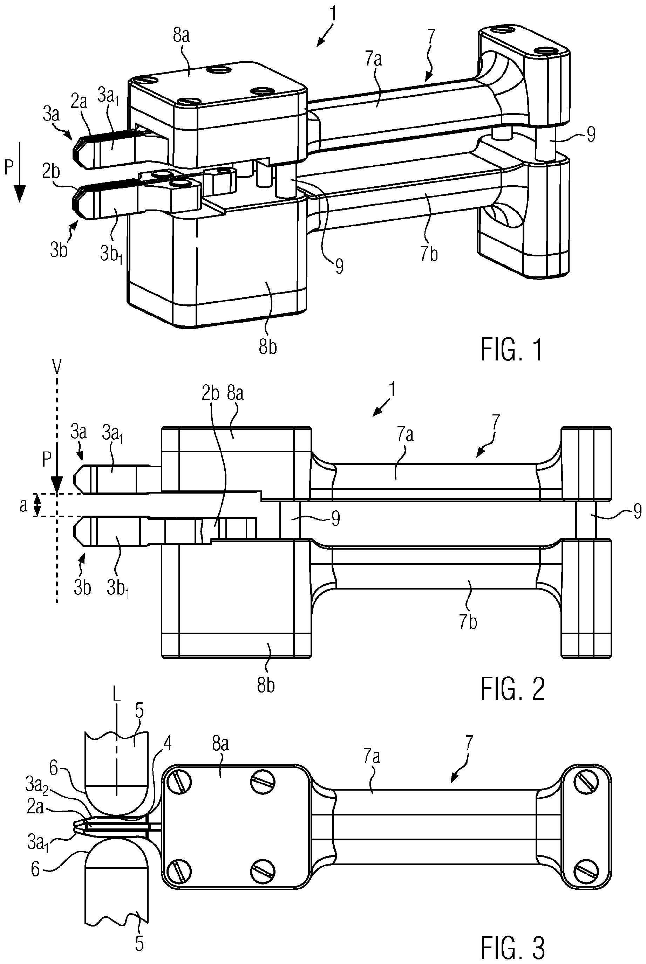

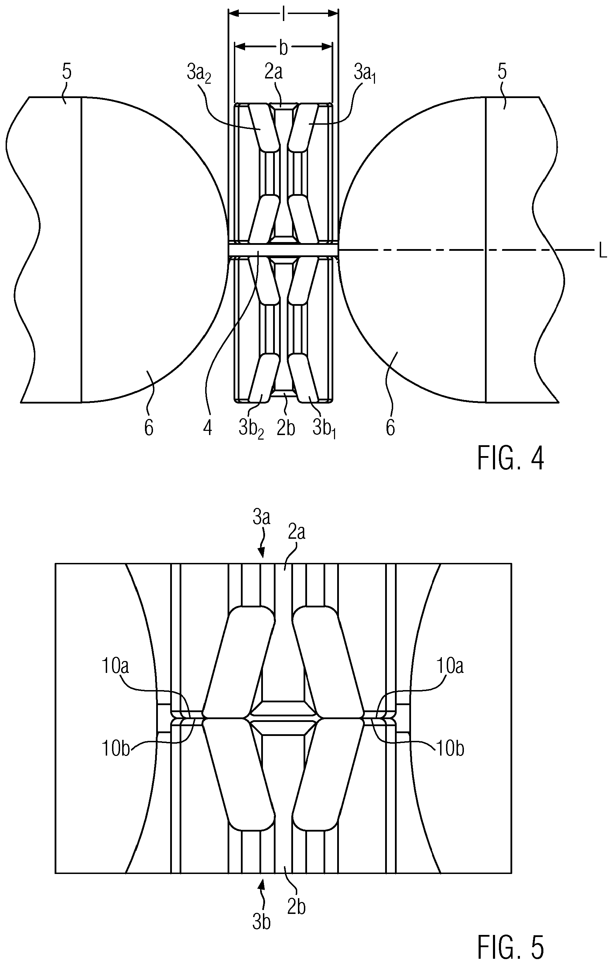

Fig. 1 zeigt in perspektivischer Darstellung ein erstes Ausführungsbeispiel eines Verschlussmoduls 1 gemäß der vorliegenden Erfindung. Das Verschlussmodul 1 dient zum Verschließen bzw. zum Verschließen und Trennen von gefüllten über einen Wurstzopf 4 verbundenen Wursthüllen 5. Solche elektrisch leitende Wursthüllen können beispielsweise ein in Salzwasser gelagerter Naturdarm oder aber ein Kunst- oder Kollagendarm sein. Die Wursthülle wird vorab beispielsweise mittels einer Füllmaschine, zum Beispiel Vakuumfüllmaschine mit pastöser Masse, zum Beispiel Brät gefüllt. Durch Einschnüren bzw. Abteilen der gefüllten Wursthüllen innerhalb einer Abdrehlinie ergibt sich eine Wurstkette aus mehreren zusammenhängenden gefüllten Wursthüllen 5, d.h. Portionen, die über einen verdrillten Wurstzopf 4 miteinander verbunden sind. Fig. 4 zeigt beispielsweise zwei gefüllte Wursthüllen 5, deren Kuppen 6 über den Wurstzopf 4 verbunden sind. Die zusammenhängenden Wurstketten aus mehreren zusammenhängenden Portionen werden dann von dem Verschlussmodul 1 z.B. so verschlossen, dass sich die gefüllten Wursthüllen z.B. beim Trennvorgang mit Hilfe eines Messers nicht wieder öffnen können. Es ist aber auch möglich, wie nachfolgend noch näher beschrieben wird, mit Hilfe des Verschlussmoduls 1 die einzelnen gefüllten Wursthüllen 5 mit dem Verschlussmodul zu verschließen und den Wurstzopf zu durchtrennen.

Wie aus Fig. 1 hervorgeht, umfasst das erfindungsgemäße Verschlussmodul 1 zwei gegenüberliegende Elektroden 2a, 2b, die relativ zueinander, wie durch den Pfeil P dargestellt ist, bewegbar sind. Fig. 1 und 2 zeigen das Verschlussmodul in geöffneter Positition. Wie aus Fig. 2 hervorgeht, befinden sich die Elektroden 2a, 2b in einem Abstand a zueinander. In diesem Ausführungsbeispiel sind in Längsrichtung L (die der Längsrichtung L der gefüllten Wursthüllen bzw. des gestreckten Wurstzopf und der Längsrichtung L des Verschlussmoduls entspricht-siehe auch Fig. 3 und 4) Stempelelemente 3a₁, 3a₂ sowie 3b₁, 3b₂ angeordnet. Die oberen Stempelelemente 3a₁, 3a₂ bilden ein erstes Stempelelementpaar 3a und die unteren Stempelelemente 3b, 3b₂ bilden ein zweites Stempelelementpaar 3b. Auch die Stempelelementpaare 3a, 3b sind relativ aufeinander zu bewegbar entlang einer Bewegungsrichtung V, wobei der Richtungsvektor V hier senkrecht zum Richtungsvektor L gerichtet ist. Die Stempelelemente sind aus nicht-leitfähigem Material gebildet und stehen nach vorne über die Elektroden 2a, 2b über, wie insbesondere aus Fig. 3 hervorgeht.

Die Stempelelemente können aber auch derart ausgebildet sein, dass sie aus einem leitfähigen oder nicht leitfähigen Material gebildet sind und eine isolierende Beschichtung aufweisen.

Aber auch die Elektroden können eine isolierende Beschichtung aufweisen und nur an den Stellen freigelegt sein, über die Strom zur anderen Elektrode fließen soll, d.h., dass zum Beispiel die untere bzw. obere Stirnseite der gegenüberliegenden Elektroden zumindest teilweise freigelegt ist.

Während die Stempelelemente im Bereich der Elektrode im Wesentlichen parallel zueinander verlaufen, nimmt der Abstand zwischen den Stempelelementen 3a₁, 3a₂ und 3b₁, 3b₂ nach vorne hin ab, so dass sich die jeweilige Elektrode in einer geschützten Position befindet. Die Stempelelemente sollen dadurch die Lücke zwischen den Wurstportionen auch zentrieren.

Wie insbesondere aus den Fig. 3 bis 5 hervorgeht, sind die Elektroden 2a, 2b derart angeordnet, dass ein Wurstzopf 4 dazwischen platzierbar ist. Das bedeutet, dass die Breite b (siehe Fig. 4) des Stempelelementpaars 3a, 3b kleiner ist als die Länge l des Wurstzopfes 4.

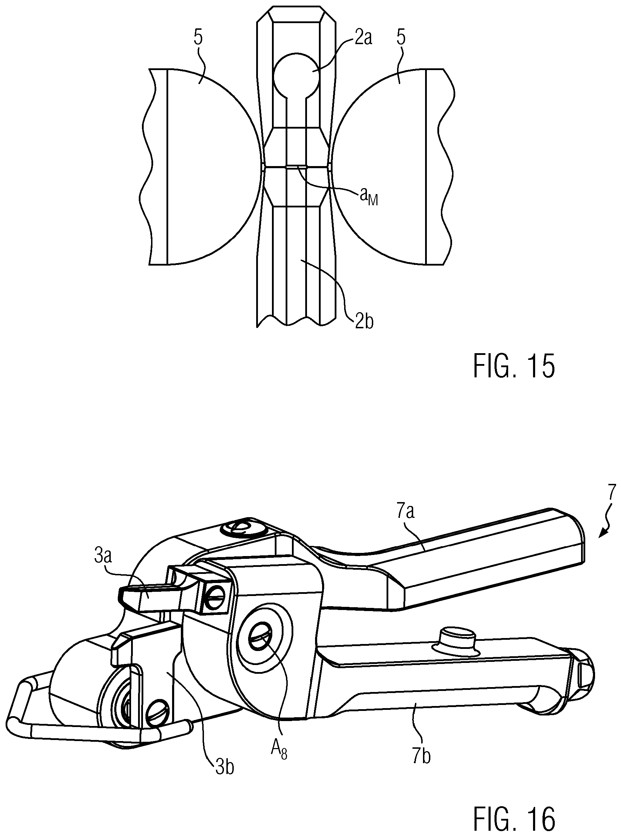

Das in Fig. 1 bis 5 gezeigte Ausführungsbeispiel ist als Handmodul ausgebildet. Dazu umfasst das Verschlussmodul 1 einen Griffbereich 7 mit zwei relativ zueinander beweglichen Griffelementen 7a, 7b. Das obere längliche Griffelement 7a ist mit einem Verschlusselement 8a verbunden, an dem das erste Stempelelementpaar 3a und die erste Elektrode 2a angeordnet ist. Das untere Griffelement 7b ist mit dem Verschlusselement 8b verbunden, an dem das zweite Stempelelementpaar 3b und die zweite Elektrode 2b angeordnet sind. Über die Säulenführungen 9 kann bei Bewegung des Griffelements 7a relativ zum Griffelement 7b der Abstand zwischen den Elektroden 2a, 2b, wie durch den Pfeil P dargestellt ist, verringert werden. Der Abstand zwischen den Elektroden kann jedoch auch mit einem mechanischen Aufbau ähnlich einer Zange verringert werden, wie in Fig. 16 dargestellt. Dabei sind das Griffelement 7a und das Griffelement 7b um die Achse A8 drehbar gelagert und so mit den Stempelelementen und Elektroden gekoppelt, dass sich gegenüberliegende Stempelelemente und Elektroden aufeinander zu bewegen, wenn die Griffelemente aufeinander zu bewegt werden. Dabei können die Griffelemente 7a, 7b durch eine nicht gezeigte Feder in eine geöffnete Position vorgespannt sein

Fig. 4 zeigt das Verschlussmodul 1 in leicht geöffnetem Zustand. Hier erkennt man, dass die Stempelpaare 3a, 3b noch nicht auf Anschlag gefahren sind, aber den Wurstzopf bereits umschließen. In Fig. 5 sind die Stempelelementpaare 3a, 3b mit ihren Stirnflächen auf Anschlag gefahren und können so den Wurstzopf 4 einklemmen. Die Elektroden 2a, 2b können jedoch nicht komplett auf Anschlag aufeinandergefahren werden, sondern weisen einen Mindestabstand a_{M} auf, derart, dass es zu keinem Kurzschluss kommt, wenn Spannung an die Elektroden angelegt wird. Fig. 15 zeigt beispielsweise diesen Mindestabstand a_{M}. Der Mindestabstand a_{M} liegt beispielsweise in einem Bereich von 0,1 mm bis 3 mm bei einem Wurstzopfdurchmesser von 0,2 mm bis 5 mm. Bei diesem Ausführungsbeispiel liegen die Elektroden 2a, 2b auf gegenüberliegenden Seiten des Wurstzopfes 4 und sind nicht versetzt zueinander.

In der in Fig. 5 gezeigten geschlossenen Position kann nun zum Verschließen bzw. Verschließen und Trennen eine Spannung an die Elektroden 2a, 2b angelegt werden. Dazu sind die Elektroden beispielsweise über nicht dargestellte Kabel mit einer Spannungsversorgung verbunden.

Die Spannungszufuhr kann entweder automatisch über einen Positionsschalter gestartet werden, wenn sich das Verschlussmodul 1 in einer geschlossenen Position befindet oder aber manuell über einen nicht dargestellten Schalter ausgelöst werden. Dabei kann es sich um einen Schalter am Gerät handeln, oder aber auch beispielsweise um einen Fußschalter.

Gemäß einer bevorzugten Ausführungsform erfolgt die Spannungszufuhr automatisch. Es wird ein Meßpotential zwischen den beiden Elektroden angelegt. Mithilfe des Meßpotentials kann zum Beispiel der Widerstand zwischen den Elektroden gemessen werden und in Abhängigkeit des Widerstands bestimmt werden, ob sich eine Wursthülle zwischen den Elektroden befindet. Wenn ermittelt wird, dass sich ein Wurstzopf im Verschlussmodul zwischen den Elektroden befindet, wird, insbesondere nach einer einstellbaren Zeit, automatisch die Spannung und/oder der Strom und somit die Leistung zum Verschließen erhöht.

Als Elektrolyt zwischen den Elektroden 2a, 2b dient der Wurstzopf. Der Strom fließt von einer Elektrode 2a durch den Wurstzopf 4 in die untere Elektrode 2b. Die elektrische Energie wird beim Durchfließen des Wurstzopfes 4 in thermische Energie umgewandelt und erwärmt den Wurstzopf. Im Naturdarm beginnt dann die thermische Denaturierung von Kollagen, d.h. die Gerinnung von Eiweiß ab ca. T = 65 Grad Celsius. Dies ist an einer weißlichen Verfärbung erkennbar. Ab ca. T = 100 Grad Celsius verdampft das Wasser und der z.B. offene Naturdarm bzw. Wurstzopf koaguliert bzw. wird verschlossen. Bei weiterer Energiezuführung steigt die Temperatur und es kommt zum Zersetzen des Darms, wodurch der Wurstzopf 4 durchtrennt wird. Entscheidend ist die Wärmeentwicklung bzw. die zugeführte Energie. Je mehr Energie pro Zeit, (d.h. elektrische Leistung) abgegeben wird, desto schneller erhöht sich die Temperatur des z.B. Naturdarms. Wird zu viel Leistung zugeführt, entsteht keine Denaturierung des Naturdarms, sondern es kommt zu einer raschen Erwärmung und Zersetzung und Durchtrennung des Wurstzopfes. Die Abteilstelle ist dann nicht koaguliert bzw. verschlossen. Daher sollte vorteilhaft die Leistung anfangs nicht zu hoch sein, so dass eine Denaturierung langsam stattfinden kann.

Durch die Klemmung des Wurstzopfes durch die Stempelelementpaare kann ein besonders schonendes Verschließen und Trennen stattfinden. An der Wurstkuppe 6 entstehen durch die z.B. abgedrehte Abteilstelle und Verdrängung der Wurstmasse, d.h. des Bräts, mechanische Spannungen an der Wursthülle. Würde nun direkt an der Wurstkuppe ein Strom eingeleitet, könnte die unter mechanischer Spannung stehende Wursthülle beim Erwärmen einreißen. Durch das Klemmen des Wurstzopfes vor dem Übergang zur Wurstkuppe 6 werden die mechanischen Spannungen " festgehalten". Der Strom wird durch das Elektrodenpaar 2a, 2b zwischen den Stempelelementen eingeleitet und durchfließt ausschließlich den Wurstzopf und nicht die unter mechanischer Spannung stehende Wursthülle der Wurstkuppe. Die Klemmung des Wurstzopfes über die Stempelelemente soll erst nach dem Ende des Stromflusses insbesondere erst nach der Denaturierung entfernt werden, so dass ein prozesssicheres Verschließen möglich ist.

Ein Trennvorgang kann ausgelöst werden, indem eine kurze elektrische Leistungserhöhung (Peak) im Anschluss an die elektrische Leistung für das Verschließen bzw. für die Denaturierung erfolgt.

Die Klemmung kann aufgehoben werden, indem die Griffelemente 7a, 7b wieder auseinanderbewegt werden, da das Verschlussmodul die Spannung nicht an den gefüllten Würsten bzw. Wursthüllen 5 selbst anlegt, sondern an einen Wurstzopf, kann auch ein Wurstende mit dem erfindungsgemäßen Verschlussmodul verschlossen werden.

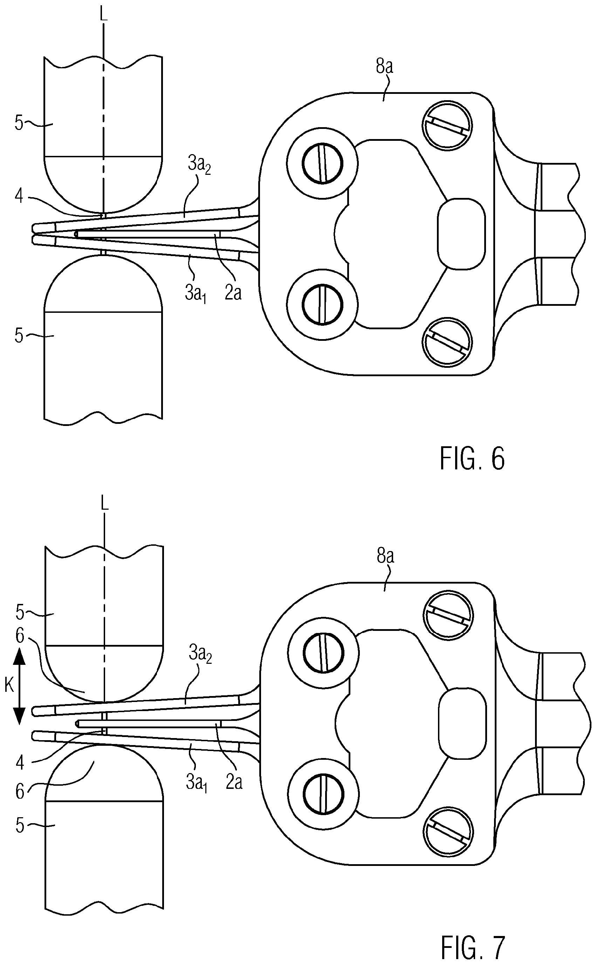

In Zusammenhang mit Fig. 6 bis 9 wird ein weiteres Ausführungsbeispiel gemäß der vorliegenden Erfindung näher erläutert. Das in den Fig. 6 bis 9 gezeigte Ausführungsbeispiel entspricht im Wesentlichen dem ersten Ausführungsbeispiel, wobei jedoch das zweite Ausführungsbeispiel eine Spreizfunktion der Stempelelemente aufweist. Fig. 6 zeigt eine Aufsicht auf das Ausführungsbeispiel, wobei das Verschlussmodul 1 in einer geöffneten Position, d.h. dass in einer Richtung V die Stempelelemente 3a₁, 3b₁, 3a₂, 3b₂ beabstandet sind und die Stempelpaare 3a, 3b zwischen den gefüllten Wursthüllen 5 eingebracht werden können und den Wurstzopf aufnehmen können. Wie aus Fig. 7 hervorgeht, können die Stempelelemente 3a₁, 3a₂, 3b₁, 3b₂ seitlich von der Elektrode 2a, 2b in Pfeilrichtung K wegbewegt werden, d.h. gespreizt werden. Fig. 7 zeigt die Stempelpaarelemente 3a₁, 3a₂ in einer gespreizten Position, wobei das Verschlussmodul 1 geschlossen ist, wie beispielsweise in Fig. 5 dargestellt ist. Das heißt, dass sich die Stempelpaarelemente in einer Richtung L , (d.h. einer Richtung, die zumindest eine Richtungskomponente in Richtung L enthält) bewegen können. Durch diese Spreizfunktion wird möglich, dass das Verschlussmodul auch innerhalb einer engeren Abteilstelle, d.h. einem kürzeren Wurstzopf 4 angesetzt werden und anschließend gespreizt werden kann. Das Spreizen strafft den Wurstzopf, so dass ein sicheres Durchtrennen möglich ist. Ohne diese Spreizfunktion, d.h. wenn die Stempelelemente sich beim Eingriff in den Wurstzopf bereits in gespreizter Stellung über den Wurstkuppen 6 befinden, besteht die Gefahr, dass die Stempelelemente beim Schließen auf die unter mechanischer Spannung stehenden Wurstkuppen drücken und diese dann beschädigen. Gemäß der Erfindung wird nur der Wurstzopf geklemmt, die Wurstkuppen 6 bleiben unberührt.

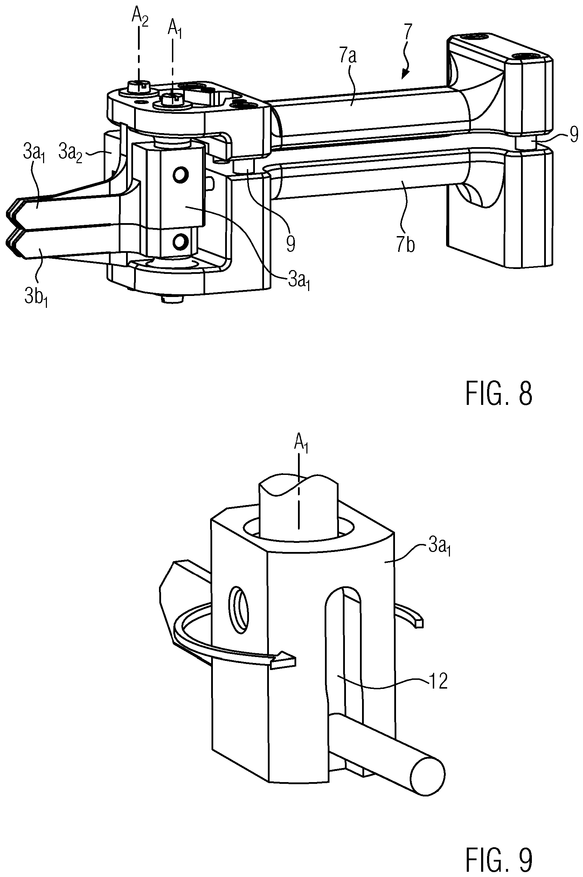

Um die Spreizelemente auseinanderzubewegen, kann beispielsweise, wie aus Fig. 8 und 9 hervorgeht, eine Kurvenbahn 12 vorgesehen sein, die bewerkstelligt, dass kurz vor dem Klemmen des Wurstzopfes 4 die Stempelelemente gespreizt sind. Dazu umfasst gemäß einem bevorzugten Ausführungsbeispiel die Führungseinrichtung zum Beispiel eine Kurvenbahn 12, die beispielsweise derart ausgebildet ist, dass, wenn die gegenüberliegenden Stempelelemente in Richtung V aufeinander zu bewegt werden, die Stempelelemente sich zumindest abschnittsweise gleichzeitig auseinanderbewegen bzw. um eine Achse A1, A2 nach außen verschwenken können. Das heißt, dass sich die Stempelelemente 3a₁, 3a₂ um die Achsen A1, A2 nach außen verschwenken, d.h. auseinanderbewegen bzw. gespreizt werden.

Die gegenüberliegenden Stempelelemente 3b₁, 3b₂ werden gleichzeitig durch den nachfolgend beschriebenen Mechanismus auseinandergeschwenkt: Das Stempelelement 3a, ist mit einem quer zur Achse A₁ angeordneten Stift mit der Welle, deren Mitte der Achse A₁ entspricht, verbunden. Diese Welle ist drehbar im oberen Griffelement 7a gelagert. Weiterhin ist im unteren Griffelement 7b ein Stift fixiert, der in die Kurvenbahn 12 des Stempelelements 3a, eingreift. Werden die beiden Griffelement 7a und 7b aufeinander zubewegt, wird das Stempelelement 3a, ebenfalls relativ zum unteren Griffelement 7b linear bewegt und die Kurvenbahn 12 bewirkt aufgrund ihrer Z-förmigen Kontur eine Schwenkbewegung des Stempelelements 3a, nach außen. Die Welle A₁ kann axial im Stempelelement 3b, bewegt werden. Ein quer zu Achse A₁ angeordneter Stift im Stempelelement 3b, durchdringt die Welle A₁ in einem vertikal eingebrachten Langloch, so dass von der Welle A₁ zwar eine Rotation auf das Stempelelement 3b, übertragen werden kann, jedoch die Welle A₁ längs zum Stempelelement 3b, frei beweglich ist. Somit wird mit den beiden Stempelelemente 3a, und 3b, eine synchrone Schwenkbewegung nach innen und nach außen erzeugt. Analog dazu bewegen sich die Stempelelemente 3a₂ und 3b₂.

Die in Fig. 8 und 9 gezeigte Führung ist nur ein Beispiel wie sich die Stempelelemente auseinanderbewegen können. Wesentlich ist nur, dass in einer geschlossenen Position des Verschlussmoduls der Abstand der Stempelelemente der Stempelelementpaare im Bereich des Wurstzopfes größer ist, als im geöffneten Zustand.

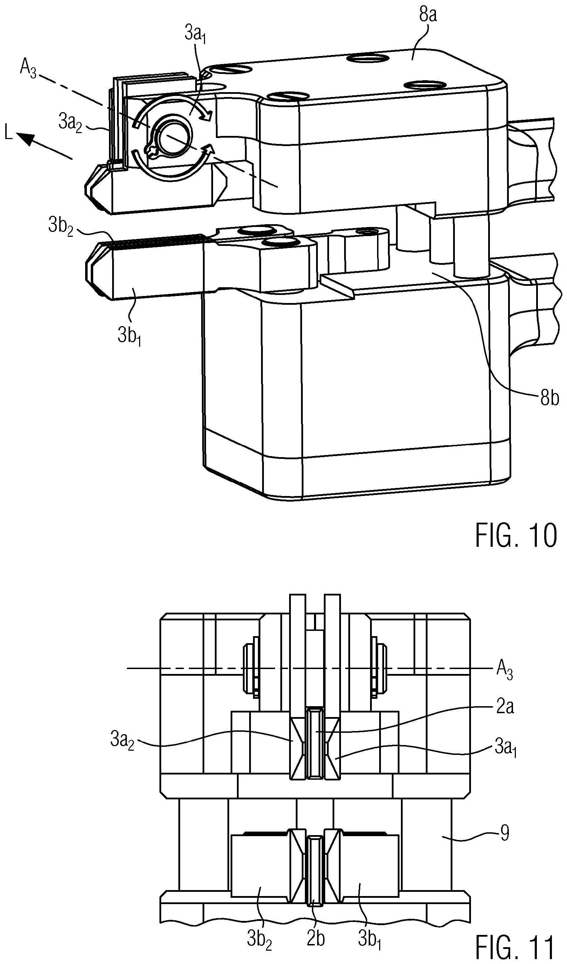

Fig. 10 zeigt ein weiteres Ausführungsbeispiel gemäß der vorliegenden Erfindung, wobei hier die Stempelelemente 3a₁, 3a₂ um eine Achse A3, die in Längsrichtung L verläuft, frei drehbar gelagert sind. Dies bringt den Vorteil mit sich, dass sichergestellt werden kann, dass die Stirnflächen der gegenüberliegenden Stempelelemente stets parallel zueinander ausgerichtet sind und somit Toleranzen ausgeglichen werden können.

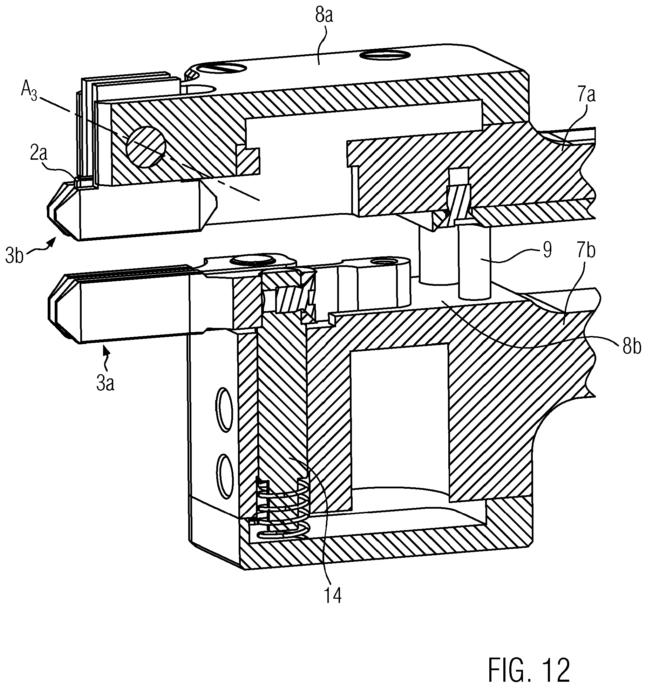

Fig. 12 zeigt eine weitere Ausführungsform der vorliegenden Erfindung. Dabei entspricht die Fig. 12 im Wesentlichen dem in Fig. 10 und 11 gezeigten Ausführungsbeispiel, bei dem z.B. das erste Stempelelementpaar 3a drehbar gelagert ist. Das untere Stempelelementpaar weist eine federvorgespannte Linearführung 14 auf. Auch diese Führung erlaubt einen Toleranzausgleich, damit sich die Stempelelemente parallel zueinander ausrichten können.

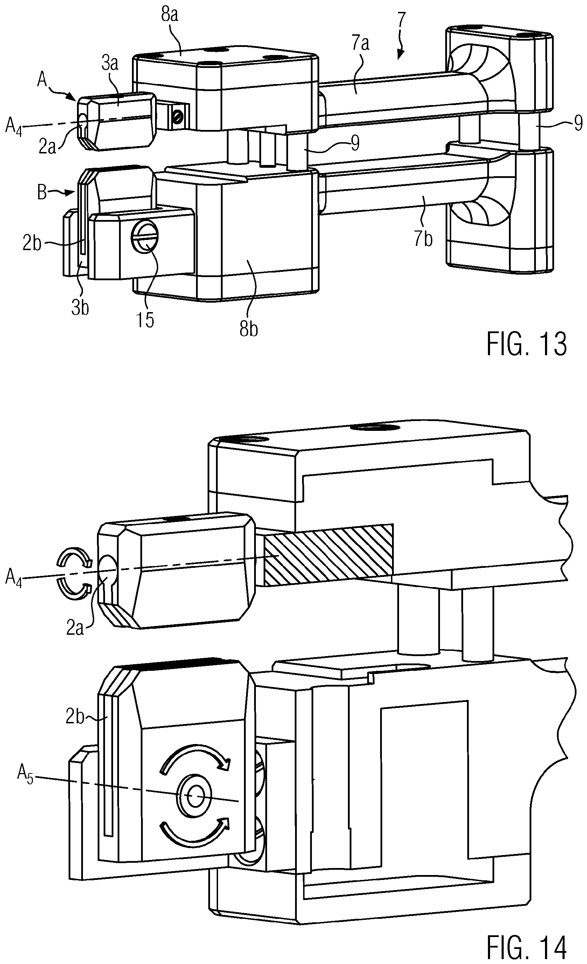

Gemäß einem bevorzugten Ausführungsbeispiel weist das Verschlussmodul 1 zwei relativ aufeinander zu bewegbare Verschlusselemente A, B auf, wie in Fig. 13 und 14 gezeigt ist, die als Einheit zusammengefasste Elektroden und Stempelelemente 2a, 3a₁, 3a₂ und 2b, 3b, und 3b₂ umfassen. Das hier zum Beispiel einstückig ausgebildete Stempelpaar liegt jeweils in Längsrichtung betrachtet an beiden Seiten der Elektrode 2a, 2b an und bildet so auf beiden Seiten der Elektrode eine Klemmstelle. Dabei kann die jeweilige Einheit A, B, drehbar gelagert sein. Die Einheiten können beispielsweise ein Spritzgussteil sein, in dem die Elektroden als ein Art Einlegeblech während dem Spritzgussverfahren in die Werkzeugform integriert werden. Die Elektroden sind auf Abstand positioniert (a_{M}), so dass eine Berührung und somit ein elektrischer Kurzschluss ausgeschlossen ist. Die Einheiten A, B können beispielsweise steckbar gelagert sein, damit bei einer eventuellen Verschmutzung ein schneller Austausch stattfinden kann und es somit zu keiner bzw. nur zu einer geringen Produktionsunterbrechung kommt. Auch bei dieser Ausführung ist es wichtig, dass die Klemmung des Wurstzopfes oder des offenen Wurstendes vor dem Übergang zur Wurstkuppe 6 erfolgt.

Wie aus Fig. 13 und 14 hervorgeht, können dann die jeweiligen Einheiten A, B drehbar gelagert sein. Die Einheit A ist beispielsweise um die Achse A4 frei drehbar gelagert, um einen Toleranzausgleich zu ermöglichen. Das untere Verschlusseinheit B ist um eine Achse A5 drehbar gelagert, die hier senkrecht zur Achse A4 steht und sich in Richtung L erstreckt.

Das erfindungsgemäße Verfahren wird nachfolgend unter Bezugnahme der Fig. 1 bis 7 näher erläutert.

Zum Verschließen bzw. Verschließen und Abtrennen von gefüllten über einen Wurstzopf 4 verbundenen Wursthüllen 5 wird zunächst das Verschlussmodul 1 beispielsweise zwischen zwei gefüllten Wursthüllen 5 platziert oder an einem offenen Wurstende (nicht dargestellt). Dazu werden die gegenüberliegenden Stempelelementpaare 3a, 3b in einen Bereich zwischen den gefüllten Wursthüllen 5 eingebracht, derart, dass der Wurstzopf 4 zwischen den Elektroden 2a, 2b und den Stempelelementen 3a₁, 3b₁, 3b₂, 3b₂ platziert wird, wie beispielsweise in Fig. 3 gezeigt ist.

Zum Verschließen bzw. Verschließen und Trennen müssen nun die Stempelelemente und Elektroden 2a, 2b relativ zueinander bewegt werden, wie durch den Pfeil P in Fig. 1 dargestellt ist. Dazu kann beispielsweise ein Bediener das Verschlussmodul 1 wie eine Greifzange verwenden und den Griffbereich 7 umfassen und die Griffelemente 7a, 7b relativ zueinander bewegen. Insbesondere wird das Griffelement 7a über die Säulenführung 9 in Richtung Griffelement 7b herabgedrückt. Dadurch bewegen sich auch die Elektroden 2a, 2b sowie die Stempelelementpaare 3a, 3b relativ zueinander bis die in Fig. 4 und schließlich in Fig. 5 gezeigte Endposition erreicht ist. Wie in Fig. 5 gezeigt ist, werden dabei die Stirnflächen 10a, 10b der jeweiligen Stempelelemente auf Anschlag gebracht, derart, dass der Wurstzopf 4 dazwischen geklemmt wird. In dieser Endposition bzw. Anschlagposition befinden sich die gegenüberliegenden Elektroden 2a, 2b beabstandet zueinander. Zwischen den Elektroden liegt der Wurstzopf 4. Es ist auch möglich, dass in dieser Position, wie zuvor beschrieben wurde, die jeweiligen Stempelelemente sich in einer gespreizten Position befinden, wie beispielsweise in Fig. 7 dargestellt ist. Über einen Positionsschalter oder eine manuelle Betätigung eines entsprechenden Schalters kann dann Strom von einer Stromquelle (nicht dargestellt) über ebenfalls nicht dargestellte Kabel über die Elektrode 2a in den Wurstzopf 4 und von diesen in die untere Elektrode 2b fließen. Besonders geeignet haben sich hochfrequente Ströme in einem Frequenzbereich von 300 kHz bis 500 kHz erwiesen. Die Spannung liegt vorteilhafterweise in einem Bereich von 80 bis 430 V. Die elektrische Energie wird in thermische Energie umgewandelt und erwärmt den Wurstzopf auf Temperaturen von 60°C bis 350°C. In diesem Temperaturbereich beginnt zum Beispiel die thermische Denaturierung von Kollagen, was an einer weißlichen Verfärbung zu erkennen ist.

Ab ca. T = 100 Grad Celsius verdampft das Wasser und der z.B. offene Naturdarm koaguliert und wird verschlossen. Bei weiterer Energiezuführung steigt die Temperatur und es kommt zum Zersetzen und Abtrennen des Wurstzopfes.

Gemäß einer bevorzugten Ausführungsform wird während eines ersten Zeitintervalls t₁ eine bestimmte Energiemenge pro Zeit abgegeben, derart, dass der Wurstzopf erwärmt wird und sich verschließt, insbesondere coaguliert. Soll nun der Wurstzopf 4 auch noch abgetrennt werden, so kann während eines zweiten Zeitintervalls t₂ eine Leistungserhöhung , insbesondere peakartige Leistungserhöhung erfolgen, was zu einem schnellen Trennvorgang führt. Die Stromzufuhr wird dann entweder manuell oder automatisch, beispielsweise nach einer vorgegebenen Zeit oder durch Auslösen eines Schalters oder Positionsschalters beendet. Die Elektroden 2a, 2b und die Stempelelementpaare 3a, 3b können dann wieder entgegen der Pfeilrichtung P auseinanderbewegt werden, so dass sich, wieder wie in Fig. 2 dargestellt ist, der Abstand a zwischen den Elektroden 2a, 2b ergibt, und das Modul 1 entfernt werden kann.

Anstatt manuell, können die Elektroden 2a, 2b bzw. die Stempelelementpaare 3a, 3b auch durch einen Stellantrieb, insbesondere pneumatischen oder elektrischen Stellantrieb aufeinander zu oder auseinander bewegt werden. Ein manuelles Auseinanderbewegen kann einfach erfolgen, indem der Bediener das Griffelement 7a lockerlässt, wobei beispielsweise die Elemente 7a, 7b durch eine nicht gezeigte Feder vorgespannt sein können (beispielsweise in den Säulenführungen 9), so dass sich automatisch wieder die in Fig. 2 gezeigte Position mit Abstand a ergibt.

## Patentansprüche

1. Verschlussmodul (1) zum Verschließen und/oder Trennen von gefüllten über einen Wurstzopf (4) verbundenen Wursthüllen (5) mit
einer ersten und einer zweiten, der ersten gegenüberliegenden Elektrode (2a,b),
die derart angeordnet sind, dass ein Wurstzopf (4) dazwischen platzierbar ist und
die relativ zueinander auf den Wurstzopf (4) zu bewegbar sind, so dass ein Strom von der ersten Elektrode (2a) in den Wurstzopf (4) und über den Wurstzopf (4) in die zweite Elektrode (2b) fließen kann, wobei über die Elektroden während eines ersten Zeitabschnitts eine Energiemenge pro Zeit abgegeben wird, derart, dass sich der Wurstzopf (4) erwärmt und verschlossen wird.

2. Verschlussmodul nach Anspruch 1, **dadurch gekennzeichnet, dass** das Verschlussmodul (1) weiter ein erstes Stempelelement (3a, ,3b₁) sowie ein gegenüberliegendes zweites Stempelelement (3b1,3b ₂) umfasst, die derart relativ aufeinander zu bewegbar sind, dass der Wurstzopf (4) zwischen den gegenüberliegenden Stempelelementen (3a₁, 3b₁) geklemmt wird und insbesondere ein
erstes Stempelpaar (3a) mit zwei nebeneinander angeordneten, voneinander beabstandeten Stempelelementen (3a₁,3a₂) sowie ein gegenüberliegendes zweites Stempelpaar (3b) mit zwei nebeneinander angeordneten, voneinander beabstandeten Stempelelementen (3a₁,3b₂) umfasst, die derart relativ aufeinander zu bewegbar sind, dass der Wurstzopf zwischen den gegenüberliegenden Stempelelementen geklemmt wird, wobei die jeweiligen Elektroden zwischen den Stempelelementen eines Stempelpaares angeordnet sind.

3. Verschlussmodul (1) nach Anspruch 1 oder 2, **dadurch gekennzeichnet, dass** die Elektroden nur bis zu einem Mindestabstand (a_{M}) in Bewegungsrichtung (V) betrachtet aufeinander zu bewegbar sind.

4. Verschlussmodul (1) nach Anspruch 2 oder 3, **dadurch gekennzeichnet, dass** die nebeneinander liegenden Stempelelemente (3a₁,3a_{2,} 3b₁,3b ₂) eines Stempelelementpaars als Spreizelemente ausgebildet sind, derart, dass sie seitlich auseinander von den Elektroden (2a, 2b) weg bewegbar sind, wobei
die Stempelelemente (3a₁,3a_{2,} 3b₁,3b ₂) sich insbesondere auseinander bewegen können, bevor sie den Wurstzopf (4) klemmen, wobei das Stempelelementpaar (3a,3b) vorzugsweise eine Führungseinrichtung (12) aufweist, die derart ausgebildet ist, dass wenn die gegenüberliegenden Stempelelemente (3a₁,3a_{2,} 3b₁,3b ₂) aufeinander zu bewegt werden sich die Stempelelemente zumindest abschnittsweise seitlich auseinander bewegen können.

5. Verschlussmodul (1) nach mindestens einem der Ansprüche 2-4, **dadurch gekennzeichnet, dass** die Stempelelemente (3a₁,3a_{2,} 3b₁,3b ₂) zumindest eines Stempelelementpaars (3a, 3b) um eine Achse (A3,A5), die sich im wesentlichen entlang einer Längsrichtung (L) quer zur Bewegungsrichtung (V) der Elektroden erstreckt, drehbar gelagert, insbesondere frei drehbar gelagert sind und/oder um eine Achse (A4) die sich im Wesentlichen quer zur Längsrichtung des Verschlussmoduls (1) und insbesondere quer zur Bewegungsrichtung (V) der Elektroden erstreckt, drehbar, insbesondere frei drehbar gelagert sind.

6. Verschlussmodul (1) nach mindestens einem der Ansprüche 2-5, **dadurch gekennzeichnet, dass** zumindest ein Stempelelementpaar (3a, 3b) eine federvorgespannte Linearführung (14) aufweist.

7. Verschlussmodul (1) nach mindestens einem der Ansprüche 2-6, **dadurch gekennzeichnet, dass** das Verschlussmodul zwei aufeinander zu bewegbare Verschlusseinheiten (A, B) aufweist, wobei die erste Verschlusseinheit (A) die erste Elektrode (2a) und ein erstes Stempelelementpaar (3a) umfasst und die zweite Verschlusseinheit (B) die zweite Elektrode (2b) und ein zweites Stempelelementpaar (3b) umfasst und insbesondere zumindest eine Verschlusseinheit (A,B) um eine Achse in Längsrichtung (L) und/ oder eine Achse quer zur Längsrichtung und quer zur Bewegungsrichtung (V) drehbar gelagert ist.

8. Verschlussmodul nach mindestens einem der Ansprüche 1-7, **dadurch gekennzeichnet, dass** die Elektroden (2a, 2b) bzw. Stempelelemente manuell oder mittels Stellantrieb, insbesondere pneumatischem oder elektrischem Stellantrieb, relativ aufeinander zu bewegbar sind.

9. Verschlussmodul nach mindestens einem der Ansprüche 1-8, **dadurch gekennzeichnet, dass** das Verschlussmodul als Handgerät ausgebildet ist, mit einem Griffbereich (7), der zwei beabstandete gegenüberliegende, relativ aufeinander zu bewegbare Griffelemente (7a,b) umfasst, die jeweils derart mit den gegenüberliegenden Elektroden bzw. Elektroden und Stempelelementen gekoppelt sind, dass wenn die Griffelemente (7a,b) aufeinander zu bewegt werden sich auch die jeweiligen Elektroden und Stempelelemente aufeinander zu bewegen.

10. Verfahren zum Verschließen und/oder Trennen von gefüllten über einen Wurstzopf (4) verbundenen Wursthüllen (5) mit folgenden Schritten:
Platzieren eines Wurstzopfes (4) zwischen einer ersten (2a) und einer zweiten (2b), der ersten Elektrode gegenüberliegenden Elektrode, wobei die Elektroden von den Wurstkuppen der gefüllten Wursthüllen beabstandet sind, derart, dass die Elektroden die gefüllten Wursthüllen nicht berühren,
Bewegen der Elektroden relativ zueinander auf den Wurstzopf (4), derart, dass ein Strom von der ersten Elektrode in den Wurstzopf fließt und über den Wurstzopf (4) in die zweite Elektrode (2a), wodurch die gefüllten Wursthüllen (5) verschlossen, vorzugsweise getrennt werden, wobei über die Elektroden während eines ersten Zeitabschnitts t₁ eine Energiemenge pro Zeit abgegeben wird, derart, dass sich der Wurstzopf (4) erwärmt und verschlossen wird.

11. Verfahren nach Anspruch 10, **dadurch gekennzeichnet, dass**
beim Verschließen der Wurstzopf durch mindestens zwei gegenüberliegende Stempelelemente, vorzugsweise durch gegenüberliegende Stempelelementpaare (3a, 3b) mit jeweils zwei Stempelelementen (3a₁,3a_{2,} 3b₁,3b ₂) zwischen denen jeweils eine Elektrode liegt, geklemmt wird, während die Elektroden nur bis zu einem Mindestabstand relativ aufeinander zu bewegt werden.

12. Verfahren nach mindestens einem der Ansprüche 10-11, **dadurch gekennzeichnet, dass** während eines zweiten Zeitabschnitts t₂ die Energiemenge pro Zeit, insbesondere peakartig erhöht wird, derart, dass es zu einem Zersetzen und Trennen des Wurstzopfs kommt.

13. Verfahren nach mindestens einem der Ansprüche 10-12 **dadurch gekennzeichnet, dass** die Wursthülle eine elektrisch leitende Wursthülle ist.

14. Verfahren nach mindestens einem der Ansprüche 10-13, **dadurch gekennzeichnet, dass** der Strom ein hochfrequenter Strom ist insbesondere in einem Frequenzbereich von 300 kHz bis 500 kHz.

15. Verfahren nach mindestens einem der Ansprüche 10-14 **dadurch gekennzeichnet, dass** eine Spannung in einem Bereich von 50-500 V, insbesondere 80-430 V an die Elektroden angelegt wird.

## Claims

1. A closure module (1) for closing and/or separating filled sausage casings (5) connected via a sausage neck (4), comprising
a first electrode (2a) and a second electrode (2b) located opposite the first one,
the electrodes (2a, 2b) being arranged such that a sausage neck (4) can be placed therebetween and being adapted to be moved relative to each other and towards the sausage neck (4), so that a current can flow from the first electrode (2a) into the sausage neck (4) and via the sausage neck (4) into the second electrode (2b) wherein
during a first period of time t₁, an amount of energy per unit time is supplied through the electrodes such that the sausage neck (4) is heated and closed.

2. The closure module according to claim 1, **characterized in that** the closure module (1) further comprises a first stamp element (3a₁, 3b₁) as well as an oppositely disposed second stamp element (3b₁, 3b₂), which are adapted to be moved relative to and towards one another such that the sausage neck (4) will be clamped between the opposed stamp elements (3a₁, 3b₁), and in particular comprises a
first stamp pair (3a) with two juxtaposed, spaced-apart stamp elements (3a₁, 3a₂) as well as an oppositely disposed second stamp pair (3b) with two juxtaposed, spaced-apart stamp elements (3a₁, 3b₂), which are adapted to be moved relative to and towards one another such that the sausage neck will be clamped between the opposed stamp elements, the respective electrodes being arranged between the stamp elements of a stamp pair.

3. The closure module (1) according to claim 1 or 2, **characterized in that** the electrodes are movable towards one another only up to a minimum distance (a_{M}), when seen in the direction of movement (V).

4. The closure module (1) according to claim 2 or 3 , **characterized in that** the juxtaposed stamp elements (3a₁, 3a₂, 3b₁, 3b₂) of a stamp element pair are configured as spreading elements such that they are laterally movable apart and away from the electrodes (2a, 2b), wherein
the stamp elements (3a₁, 3a₂, 3b₁, 3b₂) can especially move apart before they clamp the sausage neck (4), wherein the stamp element pair (3a, 3b) is preferably provided with a guide unit (12), which is configured such that, when the opposed stamp elements (3a₁, 3a₂, 3b₁, 3b₂) are moved towards one another, the stamp elements can, at least section-wise, laterally move away from one another.

5. The closure module (1) according to at least one of the claims 2-4, **characterized in that** the stamp elements (3a₁, 3a₂, 3b₁, 3b₂) of at least one stamp element pair (3a, 3b) are supported such that they are rotatable, in particular freely rotatable, about an axis (A₃, A₅) extending substantially along a longitudinal direction (L) and transversely to the direction of movement (V) of the electrodes and/or are rotatable, in particular freely rotatable, about an axis (A₄) extending substantially transversely to the longitudinal direction of the closure module (1) and in particular transversely to the direction of movement (V) of the electrodes.

6. The closure module (1) according to at least one of the claims 2-5, **characterized in that** at least one stamp element pair (3a, 3b) comprises a spring-loaded linear guide (14).

7. The closure module (1) according to at least one of the claims 2-6, **characterized in that** the closure module comprises two closure units (A, B), which are movable towards each other, the first closure unit (A) comprising the first electrode (2a) and a first stamp element pair (3a) and the second closure unit (B) comprising the second electrode (2b) and a second stamp element pair (3b), and **in that** in particular at least one closure unit (A, B) is supported such that it is rotatable about an axis in the longitudinal direction (L) and/or an axis transversely to the longitudinal direction and transversely to the direction of movement (V).

8. The closure module according to at least one of the claims 1-7, **characterized in that** the electrodes (2a, 2b) and the stamp elements, respectively, are movable relative to and towards one another manually or by means of a positioning drive, in particular a pneumatic or an electric positioning drive.

9. The closure module according to at least one of the claims 1-8, **characterized in that** the closure module is configured as a hand-held device with a handle area (7) that comprises two spaced-apart, opposed handle elements (7a, b), which are movable relative to and towards each other and which are each coupled with the respective opposed electrodes, or electrodes and stamp elements such that, when the handle elements (7a, b) are moved towards each other, also the respective electrodes and stamp elements will move towards each other.

10. A method for closing and/or separating filled sausage casings (5) connected via a sausage neck (4), comprising the following steps:
placing a sausage neck (4) between a first electrode (2a) and a second electrode (2b) located opposite the first electrode, the electrodes being spaced-apart from the rounded sausage ends of the filled sausage casings such that the electrodes will not contact the filled sausage casings,
moving the electrodes relative to each other onto the sausage neck (4) such that a current will flow from the first electrode into the sausage neck and via the sausage neck (4) into the second electrode (2a), whereby the filled sausage casings (5) will be closed, preferably separated from one another, wherein during a first period of time t₁, an amount of energy per unit time is supplied through the electrodes such that the sausage neck (4) is heated and closed.

11. The method according to claim 10, **characterized in that**
during closing, the sausage neck is clamped by at least two opposed stamp elements, preferably by opposed stamp element pairs (3a, 3b) comprising each two stamp elements (3a₁, 3a₂, 3b₁, 3b₂) having a respective electrode arranged therebetween, while the electrodes are moved relative to and towards each other only up to a minimum distance.

12. The method according to at least one of the claims 10-11, **characterized in that** during a second period of time t₂, the amount of energy per unit time is increased, in particular in a peaklike manner, such that the sausage neck will decompose and will be cut off.

13. The method according to at least one of the claims 10-12, **characterized in that** the sausage casing is an electrically conductive sausage casing.

14. The method according to at least one of the claims 10-13, **characterized in that** the current is a high-frequency current, in particular in a frequency range of 300 kHz to 500 kHz.

15. The method according to at least one of the claims 10-14, **characterized in that** a voltage in a range of 50-500 V, in particular 80-340 V, is applied to the electrodes.

## Revendications

1. . Module de fermeture (1) permettant de fermer et/ou séparer des boyaux de saucisse (5) remplis reliés par une torsade de saucisse (4), comprenant
des première et deuxième électrodes (2a, b), la deuxième faisant face à la première, qui sont agencées de telle manière qu'une torsade de saucisse (4) peut être placée entre elles et qui peuvent être déplacées l'une par rapport à l'autre sur la torsade de saucisse (4) de sorte qu'un courant (2a) peut circuler de la première électrode à la torsade de saucisse (4) et, en passant par la torsade de saucisse (4), jusqu'à la deuxième électrode (2b), dans lequel une quantité d'énergie par unité de temps est libérée par l'intermédiaire des électrodes pendant une première période de temps de telle manière que la torsade de saucisse (4) est chauffée et fermée.

2. . Module de fermeture selon la revendication 1, **caractérisé en ce que** le module de fermeture (1) comprend en outre un premier élément formant tampon (3a₁, 3b₁) ainsi qu'un deuxième élément formant tampon (3b₁, 3b₂) lui faisant face, qui peuvent être déplacés l'un vers l'autre de telle manière que la torsade de saucisse (4) est serrée entre les éléments formant tampon (3a₁, 3b₁) se faisant face, et comprend en particulier
une première paire de tampons (3a) comprenant deux éléments formant tampon (3a₁, 3a₂) agencés l'un à côté de l'autre et espacés l'un par rapport à l'autre, ainsi qu'une deuxième paire de tampons (3b) se faisant face comprenant deux éléments formant tampon (3a₁, 3b₂) agencés l'un à côté de l'autre et espacés l'un par rapport à l'autre, lesdites paires de tampons pouvant être déplacées l'une vers l'autre de telle manière que la torsade de saucisse est serrée entre les éléments formant tampon se faisant face, dans lequel les électrodes respectives sont agencées entre les éléments formant tampon d'une paire de tampons.

3. . Module de fermeture (1) selon la revendication 1 ou 2, **caractérisé en ce que** les électrodes ne peuvent être déplacées l'une vers l'autre que jusqu'à une distance minimale (a_{M}) dans la direction de déplacement (V).

4. . Module de fermeture (1) selon la revendication 2 ou 3, **caractérisé en ce que** les éléments formant tampon (3a₁, 3a₂, 3b₁, 3b₂) juxtaposés d'une paire d'éléments formant tampon sont conçus comme des éléments d'écartement, de telle manière qu'ils peuvent être écartés latéralement les uns des autres en s'éloignant des électrodes (2a, 2b), dans lequel
les éléments formant tampon (3a₁, 3a₂, 3b₁, 3b₂) peuvent en particulier s'écarter les uns des autres avant de serrer la torsade de saucisse (4), dans lequel la paire d'éléments formant tampon (3a, 3b) présente de manière préférée un dispositif de guidage (12) qui est conçu de telle manière que les éléments formant tampon peuvent s'écarter latéralement les uns des autres au moins par sections lorsque les éléments formant tampon (3a₁, 3a₂, 3b₁, 3b₂) se faisant face sont déplacés l'un vers l'autre.

5. . Module de fermeture (1) selon au moins l'une quelconque des revendications 2 à 4, **caractérisé en ce que** les éléments formant tampon (3a₁, 3a₂, 3b₁, 3b₂) d'au moins une paire d'éléments formant tampon (3a, 3b) sont montés de manière à pouvoir tourner, en particulier sont montés de manière à pouvoir tourner librement, autour d'un axe (A3, A5) s'étendant essentiellement le long d'une direction longitudinale (L) de manière transversale par rapport à la direction de déplacement (V) des électrodes, et/ou sont montés de manière à pouvoir tourner, en particulier sont montés de manière à pouvoir tourner librement, autour d'un axe (A4) s'étendant essentiellement de manière transversale par rapport à la direction longitudinale du module de fermeture (1) et en particulier de manière transversale par rapport à la direction de déplacement (V) des électrodes.

6. . Module de fermeture (1) selon au moins l'une quelconque des revendications 2 à 5, **caractérisé en ce qu'**au moins une paire d'éléments formant tampon (3a, 3b) présente un guidage linéaire (14) précontraint par ressort.

7. . Module de fermeture (1) selon au moins l'une quelconque des revendications 2 à 6, **caractérisé en ce que** le module de fermeture présente deux unités de fermeture (A, B) pouvant être déplacées l'une vers l'autre, dans lequel la première unité de fermeture (A) comprend la première électrode (2a) et une première paire d'éléments formant tampon (3a) et la deuxième unité de fermeture (B) comprend la deuxième électrode (2b) et une deuxième paire d'éléments formant tampon (3b) et en particulier au moins une unité de fermeture (A, B) est montée de manière à pouvoir tourner autour d'un axe dans la direction longitudinale (L) et/ ou d'un axe transversal par rapport à la direction longitudinale et transversal par rapport à la direction de déplacement (V).

8. . Module de fermeture selon au moins l'une quelconque des revendications 1 à 7, **caractérisé en ce que** les électrodes (2a, 2b) ou les éléments formant tampon peuvent être déplacé(e)s l'un(e) par rapport à l'autre manuellement ou au moyen d'un servomoteur, en particulier d'un servomoteur pneumatique ou électrique.

9. . Module de fermeture selon au moins l'une quelconque des revendications 1 à 8, **caractérisé en ce que** le module de fermeture est conçu comme un appareil portatif, avec une région de préhension (7) comprenant deux éléments de préhension (7a, b) espacés se faisant face, mobiles l'un vers l'autre, qui sont respectivement couplés de telle manière aux électrodes, ou aux électrodes et éléments formant tampon, se faisant face que les électrodes et éléments formant tampon respectifs se déplacent également l'un vers l'autre lorsque les éléments de préhension (7a, b) sont déplacés l'un vers l'autre.

10. . Procédé de fermeture et/ou de séparation de boyaux de saucisses (5) remplis reliés par une torsade de saucisse (4), comprenant les étapes ci-dessous consistant à :
placer une torsade de saucisse (4) entre une première (2a) et une deuxième (2b) électrode faisant face à la première électrode, dans lequel les électrodes sont espacées par rapport aux extrémités de saucisse des boyaux de saucisse remplis de manière à ce que les électrodes ne touchent pas les boyaux de saucisse remplis,
déplacer les électrodes l'une par rapport à l'autre sur la torsade de saucisse (4) de manière à ce qu'un courant circule de la première électrode jusqu'à la torsade de saucisse et, en passant par la torsade de saucisse (4), jusqu'à la deuxième électrode (2a), fermant, de manière préférée séparant, ainsi les boyaux de saucisse (5) remplis, dans lequel les électrodes libèrent une quantité d'énergie par unité de temps pendant une première période de temps t1 de manière à chauffer et fermer la torsade de saucisse (4).

11. . Procédé selon la revendication 10, **caractérisé en ce que**
lors de la fermeture, la torsade de saucisse est serrée grâce à au moins deux éléments formant tampon se faisant face, de manière préférée grâce à des paires d'éléments formant tampon (3a, 3b) se faisant face comprenant respectivement deux éléments formant tampon (3a₁, 3a₂, 3b₁, 3b₂) entre lesquels se trouve respectivement une électrode, tandis que les électrodes ne peuvent être déplacées l'une vers l'autre que jusqu'à une distance minimale.

12. . Procédé selon au moins l'une quelconque des revendications 10 à 11, **caractérisé en ce que**, pendant une deuxième période de temps t₂, la quantité d'énergie par unité de temps est en particulier augmentée pour atteindre un pic de telle manière qu'il en résulte une décomposition et une séparation de la torsade de saucisse.

13. . Procédé selon au moins l'une quelconque des revendications 10 à 12, **caractérisé en ce que** le boyau de saucisse est un boyau de saucisse électriquement conducteur.

14. . Procédé selon au moins l'une quelconque des revendications 10 à 13, **caractérisé en ce que** le courant est un courant à haute fréquence, en particulier situé dans une plage de fréquence comprise entre 300 kHz et 500 kHz.

15. . Procédé selon au moins l'une quelconque des revendications 10 à 14, **caractérisé en ce qu'**une tension située dans une plage comprise entre 50 et 500 V, en particulier comprise entre 80 et 430 V, est appliquée aux électrodes.
